# EUROPÄISCHE PATENTANMELDUNG

(11) **EP 0 892 261 A2**
(43) Veröffentlichungstag der Anmeldung: **20.01.1999**
(21) Anmeldenummer: 98112424.1
(22) Anmeldetag: 04.07.1998
(51) Int. Cl.: G01M 5/00

(54) **Verfahren zur Optimierung der Wandstärken von Maschinen- oder Fahrzeugteilen**

(30) Priorität: 16.07.1997 DE 19730402
(71) Anmelder: Daimler-Benz Aktiengesellschaft, 70567 Stuttgart (DE)
(72) Erfinder: Bux, Ralf, 91809 Biesenhard/Wellheim (DE); Kieselmann, Michael, 70469 Stuttgart (DE)

(57) **Zusammenfassung**

Die Erfindung betrifft ein Verfahren zur Optimierung der Wandstärken von Maschinen- oder Fahrzeugteilen. Das zu optimierende Bauteil wird an einer regulären Montagefuge oder einer regulären Befestigungsstelle in einer Haltevorrichtung fixiert. Daraufhin wird das Maschinen- oder Fahrzeugteil an mindestens einer regulären Krafteinleitungsstelle zumindest einachsig mechanisch und/oder thermisch belastet. Anschließend oder gleichzeitig werden an einer Vielzahl von verschiedenen Meßstellen, die als Knoten in einer FEM-Struktur zwischen der Montagefuge oder der oder den Befestigungsstellen und der Krafteinleitungsstelle angeordnet sind, die aus der Krafteinleitung resultierenden Verformungen meßtechnisch erfaßt. Unter Zuhilfenahme der nach Betrag und Richtung bekannten einzelnen Verformungen wird der Spannungsverlauf im Bauteil errechnet und entweder ein zum ermittelten Spannungsverlauf zumindest partiell annähernd proportionaler Wandstärkenverlauf oder eine minimale Konstantwandstärke berechnet.
Mit der vorliegenden Erfindung wird ein Verfahren geschaffen, mit dem vorhandene Maschinen- und Fahrzeugteile bezüglich ihrer Masse schnell und belastungsbezogen optimiert werden können.

## Beschreibung

Die Erfindung betrifft ein Verfahren zur Optimierung der Wandstärken von Maschinen- oder Fahrzeugteilen.

Viele komplizierte und/oder sicherheitstechnisch relevante Bauteile werden vor ihrer Realisierung mit Hilfe verschiedener Berechnungsverfahren ausgelegt bzw. dimensioniert. Die fertigen Bauteile werden anschließend im Versuch getestet und dann entweder für die Serienfertigung freigegeben oder nochmals überarbeitet. Eine belastungsbezogene Gewichtsoptimierung unterbleibt oft.

Der vorliegenden Erfindung liegt daher das Problem zugrunde, ein Verfahren zu schaffen, mit dem vorhandene Maschinen- und Fahrzeugteile bezüglich ihrer Masse schnell und belastungsbezogen optimiert werden können.

Das Problem wird u.a. mit den Merkmalen des Hauptanspruchs gelöst. Bei der Anwendung des Verfahrens zur Optimierung der Wandstärken von Maschinen- oder Fahrzeugteilen wird das zu optimierende Bauteil, das auch aus mehreren Einzelteilen bestehen kann, an der regulären Montagefuge oder der oder den regulären Befestigungsstellen in einer Haltevorrichtung fixiert. Daraufhin wird das Maschinen- oder Fahrzeugteil an mindestens einer regulären Krafteinleitungsstelle zumindest einachsig mechanisch und/oder thermisch belastet. Anschließend oder gleichzeitig werden an einer Vielzahl von verschiedenen Meßstellen, die als Knoten in einer FEM-Struktur zwischen der Montagefuge oder der oder den Befestigungsstellen und der Krafteinleitungsstelle angeordnet sind, die aus der Krafteinleitung resultierenden Verformungen meßtechnisch erfaßt. Unter Zuhilfenahme der nach Betrag und Richtung bekannten einzelnen Verformungen wird der Spannungsverlauf und/oder der Anteil der Formänderung im Bauteil ermittelt und entweder zum ermittelten Spannungsverlauf und/oder zum ermittelten Formänderungsanteil ein zumindest partiell annähernd proportionaler Wandstärkenverlauf oder eine minimale Konstantwandstärke gestaltet.

Mit dem Verfahren können Bauteile anhand einer Spannungsanalyse durch Verformungszuordnung, beispielsweise bei nicht linearen oder nicht eindeutig nachvollziehbaren Belastungen, bezüglich ihres Gewichtes optimal ausgelegt werden. Anstelle der Spannungsanalyse kann auch eine Analyse des Anteils der Formänderungsarbeit verwendet werden.

Als Ausführungsbeispiel wird eine Kraftfahrzeugfelge verwendet. Bisher wurde für eine Felge die Umlaufbiegung als Auslegungskriterium herangezogen. Demzufolge lag die maximale Spannung in der Übergangsstelle vom Nabenbereich zur Felgenschüssel.

Beim neuen Verfahren wird auf die Felge ein handelsüblicher Reifen montiert. Dabei entspricht der Felgenbereich zwischen dem Felgenhorn und dem Felgenhump der Montagefuge. Gegebenenfalls wird der Reifen dort zusätzlich verklebt. Über den auf regulärem Gasdruck aufgepumpten Reifen wird dann die die Felge belastende Kraft - beispielsweise statisch - eingeleitet. Dazu wird eine den realen Verhältnissen entsprechende Belastung dreiachsig über die Reifenaufstandsfläche eingeleitet und gemessen.

Die sich unter der Belastung ergebenden Verformungen werden im Bereich der Felgenhörner z.B. mechanisch oder optisch abgetastet. Dabei können die Verformungen auch bei unterschiedlichen Belastungen registriert und ausgewertet werden.

Mit Hilfe der Geometriedaten, der FEM-Struktur und den Zwangsverformungen wird der Spannungsverlauf in den einzelnen Felgenschnitten berechnet. Abschließend wird an Feigenstellen mit geringer Belastung die Wandstärke reduziert. Werden größere Änderungen vorgenommen, wird gegebenenfalls die Felge nochmals berechnet oder das Optimierungsverfahren an einem neuen Modell wiederholt.

Das Verfahren erlaubt u.a. durch eine reale Spannungsanalyse oder durch eine Analyse des Anteils der Formänderungsarbeit eine maximale Gewichtseinsparung pro Bauteil bei einer erheblichen Verkürzung der Entwicklungsdauer.

Weitere Einzelheiten der Erfindung ergeben sich aus der nachfolgenden Beschreibung einer schematisch dargestellten Ausführungsform:
- Figur 1:: Vorrichtung zur Anwendung des Verfahrens zur Wandstärkenoptimierung bei einer Kraftfahrzeugfelge;
- Figur 2:: Spannungsverlauf in einem Querschnitt der Kraftfahrzeugfelge.

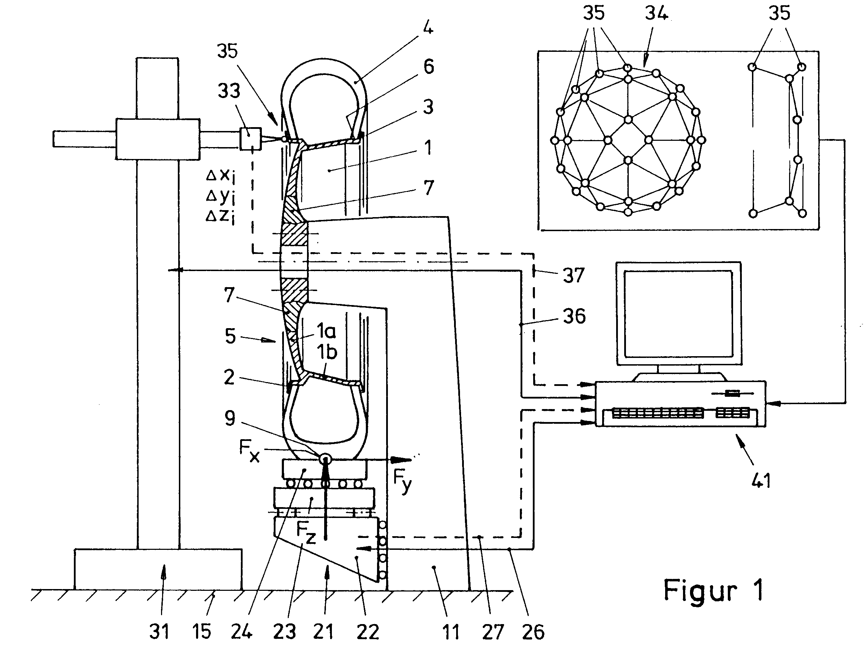

Figur 1 zeigt u.a. eine Vorrichtung mit deren Hilfe das Verfahren zur Optimierung der Wandstärken eines Maschinen- und Fahrzeugteils durchgeführt werden kann. Das Optimierungsobjekt (1) ist hier eine Kraftfahrzeugfelge aus Aluminiumniederdruckguß. Auf der Felge (1) ist zur Simulation realer Belastungsverhältnisse ein konventioneller Reifen (4) montiert. Die Felge (1) und der Reifen (4) bilden das Testrad (5).

Die mechanische Vorrichtung umfaßt drei Baugruppen. Die erste Baugruppe ist eine Haltevorrichtung (11) zur steifen und drehstarren Fixierung des Testrades (5). Die Haltevorrichtung (11) steht im Ausführungsbeispiel auf einer Grundplatte (15).

Am Fuß der Haltevorrichtung (11) ist eine Krafteinleitungsvorrichtung (21) angeordnet. Mit ihr kann das Testrad (5) in radialer Richtung (z), in Umfangsrichtung (x) und in Seitenrichtung (y) belastet werden. Dazu besteht die Krafteinleitungsvorrichtung (21) aus drei Führungssystemen, die gemeinsam ein kartesisches Koordinatensystem aufspannen. Das untere Führungssystem besteht aus einem an der Haltevorrichtung (11) gelagerten z-Schlitten (22). Auf dem z-Schlitten (22) ist ein x-Schlitten (23) geführt, der wiederum einen y-Schlitten (24) trägt. Jeder Schlitten (22, 23, 24) stützt sich an dem ihn tragenden Bauteil (11, 22, 23) mittels eines Verstellantriebes ab. In jeweils einer Anlenkung des jeweiligen Verstellantriebes ist eine Kraftmeßeinrichtung angeordnet. Die Verstellantriebe und die Kraftmeßeinrichtungen sind hier nicht dargestellt.

Auf der Grundplatte (15) ist als dritte Baugruppe beispielsweise eine Mehrkoordinatenmeßmachine (31) verschiebbar aufgestellt. Die Meßmaschine (31) kann mit ihrem Taststift (33) annähernd die gesamte vom Reifen (4) nicht bedeckte Felgenoberfläche - zumindest jedoch den Felgenhornbereich - abtasten.

Die Mehrkoordinatenmeßmaschine (31) und die Krafteinleitungsvorrichtung (21) stehen über Signal- und Steuerleitungen (26, 27) und (36, 37) mit einem Rechner (41) in Verbindung.

Zur Durchführung des Optimierungsverfahrens wird eine vorhandene Felge (1) verwendet. Sie wird zusammen mit dem montierten Reifen (4) an der Haltevorrichtung (11) mit Hilfe von Radschrauben so befestigt, wie das in der Regel auch am Bremsscheibentopf oder der Bremstrommel eines üblichen Kraftfahrzeugs erfolgt.

Parallel hierzu werden im Rechner (41) die Felgengeometriedaten, eine an die Felge angepaßte FEM-Struktur (34) und ein Meßprogramm für das Abtasten der Felge (1) geladen. Nach dem Ausrichten der Meßmaschine (31) gegenüber der Felge (1) wird die Felgenoberfläche für den Fall, daß die Konturdaten im Bereich der vorher festgelegten FEM-Oberflächenknoten noch nicht bekannt sind, zumindest partiell vermessen, um so die Oberflächenkontur der unbelasteten und nicht verformten Felge (1) im Bereich der FEM-Oberflächenknoten (35) zu erfassen. Gegebenenfalls werden die Meßstellen markiert, z.B. durch das Aufzeichnen einzelner Fadenkreuze, das Anbringen von Zentrierbohrungen oder das Aufkleben von Meßhilfen in Form von kleinen Halbkugeln. Bei der Markierung mit den aufgeklebten Halbkugeln müssen zur Ermittlung eines Felgenpunktes an der einzelnen Halbkugel mindstens vier Punkte gemessen werden.

Nach dem Ausrichten und/oder Vermessen der unbelasteten Felge (1) wird die Krafteinleitungsvorrichtung (21) aktiviert. Der y-Schlitten (24) legt sich am Reifen (4) an. Alle Schlitten (22 - 24) werden für die Simulation eines wählbaren, regulären Lastfalls entsprechend eingestellt. Aufgrund der Anordnung der Krafteinleitungsvorrichtung (21) wird der Reifen (4) besonders im Latschbereich und im Felgenhornbereich deformiert. Entsprechend der Reifenverformung verformen sich auch die hochbelasteten Felgenhörner (2, 3). Die einzelnen Kraftmeßeinrichtungen liefern die an jedem Schlittenantrieb anliegenden Kräfte. Letztere werden über die Signalleitung (27) an den Rechner (41) übermittelt.

Diese Felgenverformung wird mittels der Meßmaschine (31) im Bereich der FEM-Oberflächenknoten (35) gemessen. Dazu fährt die Meßmaschine (31) beispielsweise pro Felgenhorn (2, 3) 16 Meßstellen an. Jede Meßstelle entspricht einem FEM-Oberflächenknoten. Bei einer Halbkugelmarkierung werden pro Meßstelle 4 Messungen durchgeführt. Die ermittelten Koordinaten werden als Weginformationen an den Rechner (41) weitergeleitet und dort mit den entsprechenden Meßstellenkoordinaten der unbelasteten Felge verglichen, um daraus die Verlagerungen der einzelnen Meßstellen bzw. die dortigen Verformungen der Felge (1) zu errechnen.

Mit Hilfe dieser Verformungswerte werden vom FEM-Rechenprogramm die verschiedenen Spannungsverläufe in der Felgenwandung berechnet. Die Spannungsverläufe in verschiedenen Schnittebenen zeigen in der Felge (1) Zonen unterschiedlicher Belastung. In den weniger belasteten Zonen (7), in denen eine niedrigere Vergleichsspannung auftritt, kann die Wandstärke verringert werden, ohne daß sich dadurch die Verformung der Felge (1) bei vergleichbarer Last merkbar vergrößert.

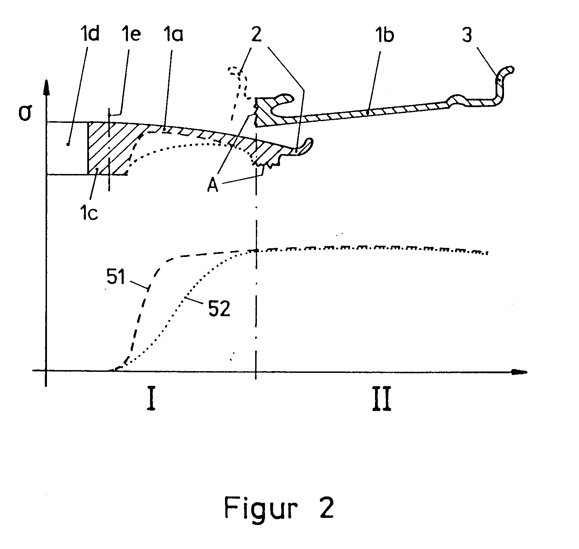

Ein Programm zur Optimierung der Felgenmasse errechnet für die einzelnen geringer belasteten Zonen neue, dünnere Wandstärken. In Figur 2 ist ein Diagramm dargestellt, das den Spannungsverlauf entlang eines halben Felgenschnittes zeigt. Zur einfacheren Darstellung des Spannungsverlaufs sind der Schüsselbereich (1a) und der Felgenbettbereich (1b) derselben Felge (1) nebeneinander aufgezeichnet und oberhalb der Kurven (51, 52) dargestellt. Beide Bereiche (1a) und (1b) gehen an der Schnittstelle "A" ineinander über.

In dem Diagrammbereich I, in dem die Felgenschüssel gezeigt ist, sind zwei Spannungsverläufe (51, 52) idealisiert dargestellt. Der gepunktet gezeichnete Spannungsverlauf (52) entspricht der gepunkteten Felgenkontur, wie sie bisher gebaut wurde. Der Spannungsverlauf (52) steigt nach dem Lochkreis (1e) allmählich bis zur Schnittstelle "A" an. Im Felgenbettbereich (1b), vgl. Diagrammbereich II, erreicht der Spannungsverlauf seinen Maximalwert. Letzerer liegt erheblich höher als die durchschnittliche Vergleichsspannung im Schüsselbereich (1a).

Mit dem neuen Optimierungsverfahren wird die neue Wandstärke, gestrichelt dargestellt, im Schüsselbereich (1a) soweit reduziert, daß sie sich zumindest abschnittsweise proportional zum gestrichelten Spannungsverlauf (51) erstreckt. Beim Ausführungsbeispiel ergibt sich durch die Wandstärkenverringerung im Schüsselbereich (1a) je nach Felgengröße und Felgenwerkstoff eine Massenreduktion von 10 bis 20 %. Neben dieser Senkung der Fahrzeuggesamtmasse, die u.a. einen geringeren Kraftstoffverbrauch bewirkt, hat eine Massenreduktion in dieser Größenordnung an der ungefederten Fahrzeugmasse zum einen eine erhebliche, positive Auswirkung auf die Fahrwerksauslegung und zum anderen verbessert sie die Fahrdynamik.

### Bezugszeichenliste

- 1: Optimierungsobjekt, Kraftfahrzeugfelge, Felge
- 1a: Schüsselbereich
- 1b: Felgenbettbereich
- 1c: Nabenflanschbereich
- 1d: Mittenloch
- 1e: Lochkreis für die Felgenbefestigungsmittel
- 2, 3: Felgenhörner; innen, außen
- 4: Reifen
- 5: Testrad
- 6: Montagefuge
- 7: Zonen gerinerer Belastung
- 9: Krafteinleitungsstelle
- 11: Haltevorrichtung
- 15: Grundplatte
- 21: Krafteinleitungsvorrichtung
- 22: z-Schlitten
- 23: x-Schlitten
- 24: y-Schlitten
- 26: Steuerleitungen für die Schlittenantriebe
- 27: Kraftsignalleitungen von den Kraftmeßeinrichtungen
- 31: Mehrkoordinatenmeßmachine, Meßmaschine
- 33: Taststift
- 34: FEM-Struktur
- 35: Meßstellen, FEM-Oberflächenknoten
- 36: Steuerleitungen für die Meßmaschinenantriebe
- 37: Signalleitungen für die Weginformationen
- 41: Rechner
- 51, 52: Spannungsverlaufskurve

## Patentansprüche

1. Verfahren zur Optimierung der Wandstärken von Maschinen- oder Fahrzeugteilen, dadurch gekennzeichnet,
- daß das Maschinen- oder Fahrzeugteil (1) an der regulären Montagefuge (6) oder der oder den regulären Befestigungsstellen in einer Haltevorrichtung (11) fixiert wird,
- daß das Maschinen- oder Fahrzeugteil (1) an mindestens einer regulären Krafteinleitungsstelle (9) zumindest einachsig mechanisch und/oder thermisch belastet wird,
- daß an einer Vielzahl von verschiedenen Meßstellen (35), die als Knoten in einer FEM-Struktur (34) zwischen der Montagefuge (6) oder der oder den Befestigungsstellen und der Krafteinleitungsstelle (9) angeordnet sind, die aus der Krafteinleitung resultierenden Verformungen meßtechnisch erfaßt werden,
- daß unter Zuhilfenahme der nach Betrag und Richtung bekannten einzelnen Verformungen der Spannungsverlauf und/oder der Anteil der Formänderung im Maschinen- oder Fahrzeugteil ermittelt wird, und
- daß entweder zum ermittelten Spannungsverlauf und/oder zum ermittelten Formänderungsanteil ein zumindest partiell annähernd proportionaler Wandstärkenverlauf oder eine minimale Konstantwandstärke gestaltet wird.

2. Verfahren gemäß Anspruch 1, dadurch gekennzeichnet, daß das Maschinen- und Fahrzeugteil eine Kraftfahrzeugfelge ist, in die über einen montierten Reifen (4) eine die Felge (1) belastende Kraft eingeleitet wird.

3. Verfahren gemäß Anspruch 2, dadurch gekennzeichnet, daß die den Reifen (4) und die Felge (1) belastende Kraft über den Latsch eingeleitet wird.

4. Verfahren gemäß Anspruch 3, dadurch gekennzeichnet, daß die den Reifen (4) und die Felge (1) belastende Kraft mit Hilfe einer Krafteinleitungsvorrichtung (21) erzeugt wird, die aus drei hintereinander angeordenten, ein kartesisches Koordinatensystem aufspannenden Geradführungen (22 - 24) besteht, wobei sich jede Geradführung (22 - 24) an dem sie tragenden Bauteil (11, 22, 23) mit einem separaten Antrieb abstützt.

5. Verfahren gemäß Anspruch 2, dadurch gekennzeichnet, daß die Felgenverformungen im Hornbereich (2, 3) gemessen werden.
